(19) Europäisches Patentamt

European Patent Office

Office européen des brevets

(11) **EP 3 358 726 A1**

(12) **EUROPEAN PATENT APPLICATION**

(43) Date of publication:
08.08.2018 Bulletin 2018/32

(51) Int Cl.:
*H02K 24/00* (2006.01)        *H02K 3/26* (2006.01)
*H02K 11/215* (2016.01)

(21) Application number: 18152896.9

(22) Date of filing: 23.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 03.02.2017   JP 2017018902

(71) Applicant: Shinano Kenshi Co., Ltd.
Ueda-shi, Nagano 386-0498 (JP)

(72) Inventor: UNI, Masahiko
Ueda-shi, 386-0498, Nagano (JP)

(74) Representative: Haseltine Lake LLP
Lincoln House, 5th Floor
300 High Holborn
London WC1V 7JH (GB)

(54) **ROTATIONAL POSITION DETECTION DEVICE AND MOTOR DEVICE**

(57)    A rotational position detection device includes: an FG magnet rotating together with a rotor and having N poles and S poles alternately magnetized at even intervals in a circumferential direction around a rotation axis of the rotor; and a printed circuit board on which an FG pattern facing the FG magnet is formed such that an induced voltage is generated by rotation of the FG magnet, wherein the FG pattern includes patterns electrically separated from each other on the printed circuit board, and the patterns differ from each other by an electrical angle excluding an integral multiple of 180 degrees in electrical angle.

FIG. 2B

# Description

The present invention relates to a rotational position detection device and a motor device.

There is known a rotational position detection device for detecting a rotational position of a rotor based on an induced electromotive force in an FG (i.e. frequency generator) pattern facing an FG (i.e. frequency generator) magnet rotating together with the rotor (for example, see Patent Document 1).

[Patent Document 1] Japanese Unexamined Patent Application Publication No. 2016-99584

It is preferable to further improve the detection accuracy of such a rotational position detection device.

It is therefore desirable to provide a rotational position detection device with improved detection accuracy of a rotational position and a motor device having the same.

According to an embodiment of the present invention there is provided a rotational position detection device including: an FG magnet rotating together with a rotor and having N poles and S poles alternately magnetized at even intervals in a circumferential direction around a rotation axis of the rotor; and a printed circuit board on which an FG pattern facing the FG magnet is formed such that an induced voltage is generated by rotation of the FG magnet, wherein the FG pattern includes patterns electrically separated from each other on the printed circuit board, and the patterns differ from each other by an electrical angle excluding an integral multiple of 180 degrees in electrical angle. Also, the above object is achieved by a motor device including the above rotational position detection device.

An embodiment of the present invention may provide a rotational position detection device with improved detection accuracy of a rotational position and a motor device having the same.

Reference will now be made, by way of example, to the accompanying drawings, in which:

    FIG. 1 is a perspective view of a motor device equipped with a rotational position detection device according to the present embodiment;

    FIG. 2A is a perspective view illustrating an FG magnet and an FG pattern, and FIG. 2B is an explanatory view of a shape of the FG pattern;

    FIGs. 3A and 3B are respectively graphs illustrating induced voltage signals generated in the patterns according to rotation of the FG magnet, and FIGs. 3C and 3D are graphs illustrating rectangular waves generated based on the induced voltage signals generated in the respective patterns by a comparator or the like;

    FIGs. 4A and 4B are explanatory views of an FG pattern in the first variation;

    FIG. 5A is an explanatory view of an FG pattern in the second variation, and FIG. 5B is an explanatory view of the third variation; and

    FIG. 6A is an explanatory view of an FG pattern in the fourth variation, and FIG. 6B is an explanatory view of the fifth variation.

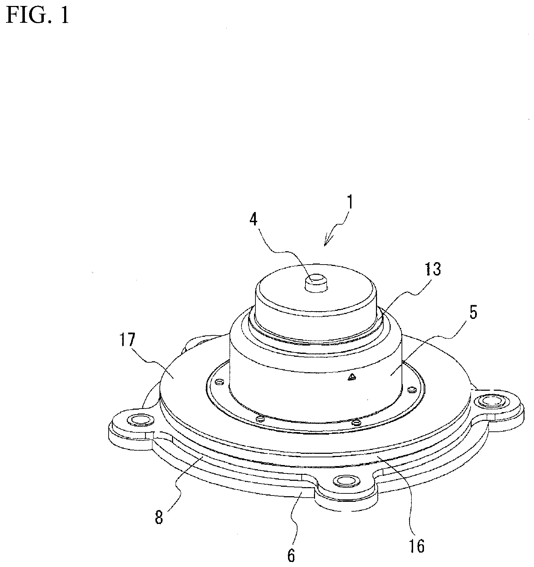

FIG. 1 is a perspective view of a motor device 1 equipped with a rotational position detection device according to the present embodiment. The motor device 1 includes a rotor shaft 4, a rotor yoke 5, a base plate 6, a printed circuit board 8, a rotor hub 13, an FG magnet 16, a back yoke 17, and the like. The rotor shaft 4 is rotatably supported by the base plate 6 via bearings. The rotor yoke 5 having a tubular shape is integrally assembled with the rotor hub 13. A tubular portion provided within the rotor hub 13 is integrally assembled with the rotor shaft 4 by press fitting, shrink fitting, adhesion, welding or the like. Permanent magnets are fixed to an inner circumferential surface of the rotor yoke 5. The permanent magnets are arranged so as to alternately arrange N poles and S poles in the circumferential direction. Each permanent magnet faces each pole tooth of a stator disposed within the rotor yoke 5. A coil is wound around each pole tooth of the stator. A change in energization states of the coils causes a magnetic attractive force or a magnetic repulsive force to exert between each pole tooth and each permanent magnet, which rotates the rotor yoke 5. The motor device 1 according to the present embodiment is, but not limited to, a so-called outer rotor type motor, and it may be an inner rotor type motor.

The printed circuit board 8 is arranged on the base plate 6. The printed circuit board 8 is conductively connected to each coil, and switches the energization state of each coil. The back yoke 17 provided at a lower end portion of the rotor yoke 5 is a substantially disc-shaped magnetic body and thinner and larger in diameter than the rotor yoke 5. The FG magnet 16 is fixed on a lower surface of the back yoke 17. Thus, the back yoke 17 and the FG magnet 16 rotate together with the rotor yoke 5. The FG magnet 16 faces the printed circuit board 8. On the printed circuit board 8, an FG pattern 19 described later is formed on the surface facing the FG magnet 16. The rotation of the FG magnet 16 generates an induced voltage in the FG pattern 19. By detecting this voltage signal, the rotational position of the FG magnet 16, that is, the rotational position of the rotor yoke 5 is detected. Therefore, the FG magnet 16 and the printed circuit board 8 on which the FG pattern 19 is formed correspond to the rotational position detection device. The FG magnet 16 is fixed to, but not limited to, the back yoke 17 in the present embodiment, and it is fixed to anything as long as the FG magnet 16 can be connected to the rotor yoke 5 and as the FG magnet 16 can rotate together with the rotor yoke 5.

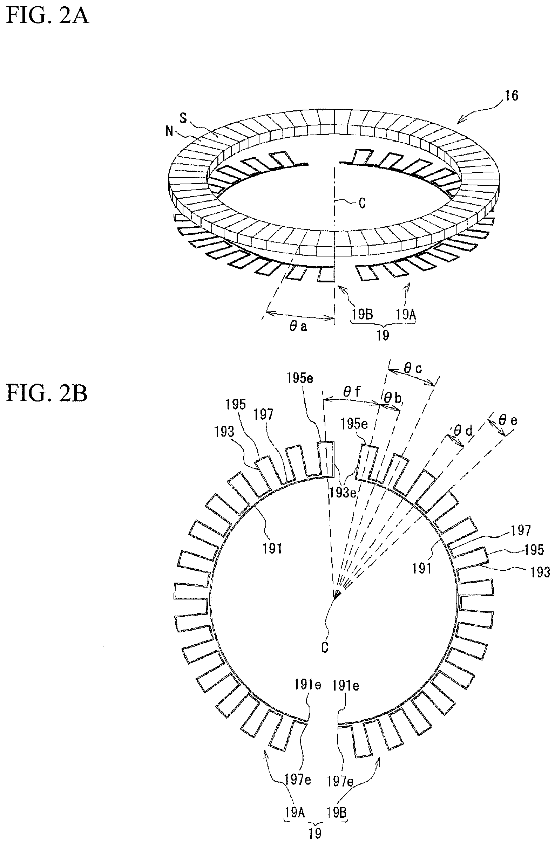

FIG. 2A is a perspective view illustrating the FG magnet 16 and the FG pattern 19. The FG magnet 16 has an annular shape so as to alternately magnetize N poles and S poles at even intervals in the circumferential direction. Herein, $\theta a$ indicates an angle of a pair of N pole and S pole adjacent to each other with respect to a central axis C of the rotor shaft 4. The FG pattern 19 is formed concentrically with the FG magnet 16. The FG pattern 19 includes a first pattern 19A and a second pattern 19B (hereinafter, simply referred to as patterns) spaced apart from each other in the circumferential direction and electrically separated from each other on the printed circuit board 8. The patterns 19A and 19B formed concentrically about the center axis C on the same circumference are spaced from each other in the circumferential direction at a predetermined interval.

FIG. 2B is an explanatory view of the shape of the FG pattern 19. Each of the patterns 19A and 19B includes an arc portions 191, radial portions 193, first connection portions 195, and the second connection portions 197 electrically connected in series with one another. The arc portion 191 has an arc shape with the center axis C as a center. The radial portion 193, the first connection portion 195, and the second connection portion 197 are located outside the arc portion 191. The radial portion 193extends radially with respect to the center axis C as a center. The first connection portion 195 has a substantially linear shape in the circumferential direction so as to be continuous with the adjacent two radial portions 193. The second connection portion 197 also has a substantially linear shape in the circumferential direction so as to be continuous with the adjacent two radial portions 193. The first connection portion 195 and the second connection portion 197 are alternately arranged in the circumferential direction. The first connection portion 195 is distant from the central axis C. The second connection portion 197 is formed close to the central axis C in the vicinity of the arc portion 191. As described above, the arc portion 191 has an arc shape, whereas the radial portion 193, the first connection portion 195, and the second connection portion 197 each has a substantially linear shape. The radial portions 193, the first connection portions 195, and the second connection portions 197 are continuous so as to form a rectangular wavy shape as a whole.

The pattern 19A clockwisely extends in an arc shape about the central axis C from a start end portion 191e of the arc portion 191, and turns back in the opposite direction from a radial portion 193e and extends to a terminal end portion 197e of the second connection portion 197 in a rectangular wavy shape. The pattern 19B clockwisely extends an arc shape about the center axis C from the start end portion 191e of the arc portion 191, and turns back in the opposite direction from the radial portion 193e and extends to the terminal end portion 197e of the second connection portion 197 in a rectangular wavy shape.

The start end portion 191e is an end portion of the arc portion 191 and also an end portion of the pattern 19A. The terminal end portion 197e is also an end portion of the second connection portion 197 and an end portion of the pattern 19A. The start end portion 191e and the terminal end portion 197e of the pattern 19A are close to each other. The same is true for the start end portion 191e and the terminal end portion 197e of the pattern 19B. That is, the start end portion 191e and the terminal end portion 197e are positioned at an end of the pattern 19A, and the start end portion 191e and the terminal end portion 197e are positioned at an end of the pattern 19B. The ends of the patterns 19A and 19B face one other.

The radial portion 193e of the radial portions 193 is a portion directly continuous to the arc portion 191 and corresponds to the other end of the pattern 19A. The radiation portions 193e of the patterns 19A and 19B face to each other. That is, the other ends of the patterns 19A and 19B face each other.

Here, the angle θa [deg] of a pair of N poles and S poles adjacent to each other of the FG magnet 16 is a mechanical angle corresponding to 360 degrees of an electrical angle. Further, θb [deg] indicates an angle between the centers of the adjacent first connection portion 195 and second connection portion 197. θc [deg] indicates an angle between the centers of the two first connection portions 195 adjacent to each other. θd [deg] indicates an angle between the two radial portions 193 adjacent to each other via the first connection portion 195. θe [deg] indicates an angle between the two radial portions 193 continuous to each other via the second connection portion 197. As described above, the first connection portion 195e of the pattern 19A and the first connection portion 195e of the pattern 19B are closest adjacent to each other among the patterns 19A and 19B, and θf [deg] indicates an angle between the centers of the first connection portions 195e. N1 indicates the total number of poles of the FG magnet 16. The total number of poles of the FG magnet 16 is the total number of S poles and N poles magnetized alternately in the circumferential direction. N2 indicates the total number of FG patterns. Thus, the following equations are satisfied.

$$\theta b = \theta d = \theta e = \theta a / 2 \dots (1)$$

$$\theta c = \theta a \dots (2)$$

$$\theta a = 360 / (N1 / 2) \dots (3)$$

$$\theta f = \{ \theta a / (2 \times N2) \} \times i \dots (4)$$

$$i \neq 2n \dots (5)$$

Herein, i and n are integers. Hence, θf corresponding to an integral multiplication of 180 degrees in the electrical angle is excluded.

In the present embodiment, θf=(θa/4)×i is satisfied. Also, N1=60 and θa=12 degrees are satisfied. When i is 1, 5, 9..., the voltage signals induced in each of the patterns 19A and 19B are different from each other by 90 degrees in electrical angle. When i is 3, 7, 11..., they are different from each other by 270 degrees in electrical angle.

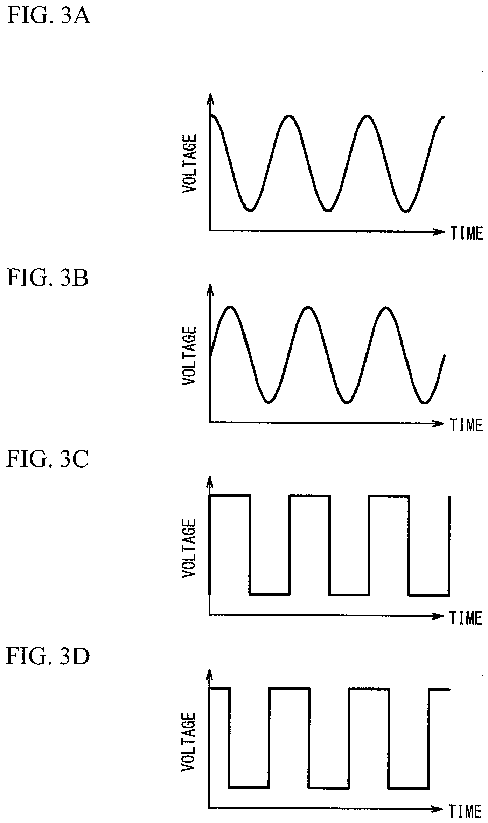

FIGs. 3A and 3B are respectively graphs illustrating induced voltage signals generated in the patterns 19A and 19B according to the rotation of the FG magnet 16. FIGs. 3C and 3D are graphs illustrating rectangular waves generated based on the induced voltage signals generated in the respective patterns 19A and 19B by a comparator or the like. FIGs. 3A to 3D are graphs in the case where the voltage signals induced in each of the patterns 19A and 19B are different from each other by 90 degrees in electrical angle. As illustrated in FIGS. 3C and 3D, the rotational position of the FG magnet 16 is detected by detecting the rising timing or the falling timing of each rectangular waveform. For this reason, as compared with the conventional case where only a single FG pattern is formed, the present embodiment doubly increases the resolution of the rotational position of the FG magnet 16 so as to improve the rotational position detection accuracy.

Also, as described above, the case where θf corresponds to an integral multiplication of 180 degrees in electrical angle is excluded. That is, when the voltage signals induced in each of the patterns 19A and 19B are different from each other by 180 degrees in electrical angle, they are excluded. For example, when the electrical angle is different by 180 degrees, the rising timing of the rectangular waveform in one of the patterns 19A and 19B is the same as the rising timing or the falling timing of the rectangular waveform in the other. For this reason, the resolution of the rotational position is the same as the case of provision of only a single conventional FG pattern, and the detection accuracy of the rotational position is not improved. On the other hand, the present embodiment improve the detection accuracy of the rotational position, since the case where the electrical angle is different from each other by 180 degrees is excluded as described above.

Also, as illustrated in FIGs. 2A and 2B, two patterns 19A and 19B are formed on the printed circuit board 8 so as to be arranged on the same circumference. For example, it is conceivable to arrange two patterns concentrically arranged radially about the central axis C. However, when each of the two patterns partially has a rectangular wavy shape as described above, the two patterns arranged in the radial direction might increase the area occupied by the two patterns, which might enlarge the printed circuit board 8 to ensure the mounting area of other electronic components thereon as necessary. On the other hand, the present embodiment arranges the two patterns 19A and 19B to be aligned on the same circumference as described above, which suppresses an increase in the occupied area of the patterns 19A and 19B on the printed circuit board 8 and which improves the detection accuracy of the rotational position.

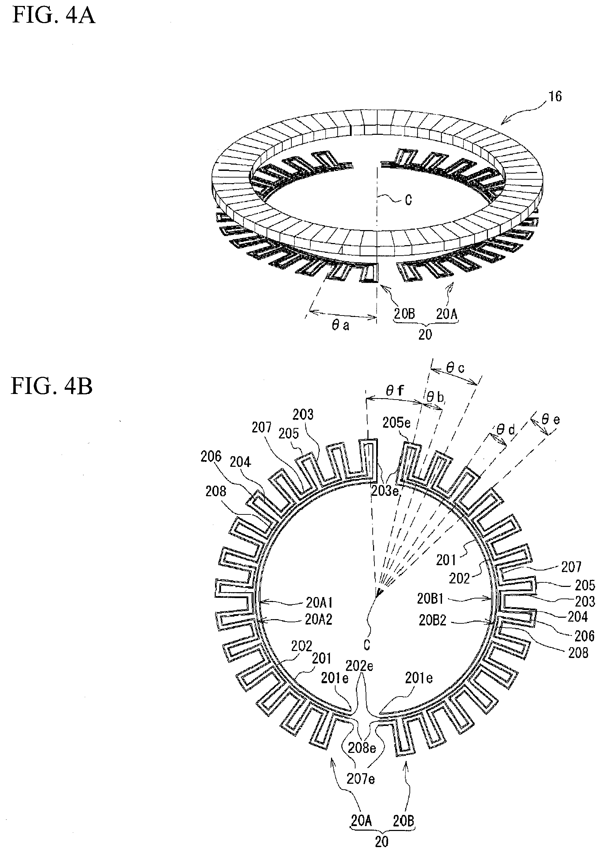

Next, variations will be described. FIGs. 4A and 4B are explanatory views of an FG pattern 20 in the first variation. It is to be noted that similar components of the above embodiment are denoted by similar reference numerals, and redundant description will be omitted. FIGs. 4A and 4B respectively correspond to FIGs. 2A and 2B.

The FG pattern 20 includes two patterns 20A and 20B. The pattern 20A is doubly formed, specifically, includes the parallel patterns 20A1 and 20A2. The parallel pattern 20A1 is displaced outside the pattern 19A according to the above embodiment, and the parallel pattern 20A2 is displaced by substantially the same distance inside the pattern 19A according to the above embodiment. Specifically, the parallel pattern 20A1 includes an arc portion 201, radial portions 203, first connection portions 205, and second connection portions 207. The parallel pattern 20A2 includes an arc portion 202, radial portions 204, first connection portions 206, and second connection portions 208. The arc portion 202 is located radially outward from the arc portion 201. The first connection portions 206 are located radially inward from the first connection portion 205. Two adjacent radial portions 204 face each other via the first connection portion 206. The two adjacent radial portions 203 via the first connection portion 205 are positioned so as to sandwich the two radial portions 204. The two adjacent radial portions 203 face each other via the second connection portion 207. The two adjacent radial portions 204 via the second connection portion 208 are positioned so as to sandwich the two radial portions 203.

Likewise, the pattern 20B is doubly formed and specifically includes parallel patterns 20B1 and 20B2. The parallel pattern 20B1 is displaced outside the pattern 19B according to the above embodiment. The parallel pattern 20B 2 is displaced by substantially the same distance to the inside of the pattern 19B according to the above embodiment. The parallel pattern 20B1 also includes an arc portion 201, radial portions 203, the first connection portions 205, and the second connection portions 207. The parallel pattern 20B2 also includes an arc portion 202, radial portions 204, the first connection portions 206, and the second connection portions 208.

In the pattern 20A, a terminal end portion 207e is conductively connected to the start end portion 202e, and the rotational position of the FG magnet 16 is detected based on the induced voltage signal. Herein, the pattern 20A includes the parallel patterns 20A1 and 20A2 as described above, which increases the amplitude of the voltage signal generated in the pattern 20A as compared with the pattern 19A according to the above described embodiment. The same is true for the pattern 20B.

In the first variation, θb indicates an angle between the centers of the adjacent first connection portion 205 and second connection portion 207. θc indicates an angle between the centers of the two adjacent first connection portions 205. θd indicates an angle between the two adjacent radial portions 203 via the first connection portion 205. θe indicates an angle between the two radial portions 203 continuous to each other via the second connection portion 207. θf indicates an angle between the centers of the first connection portions 205e closest adjacent to each other among the first connection portions 205 of the patterns 20A and 20B. In addition, N1 indicates the number of poles of the FG magnet 16. When N2 indicates the total number of FG patterns, the above equations (1) to (4) are satisfied. Also, the detection accuracy of the rotational position is improved in the first variation, like the above-described embodiment.

In the first variation, both of the two patterns 20A and 20B are doubly formed, but only one of the two patterns may be doubly formed.

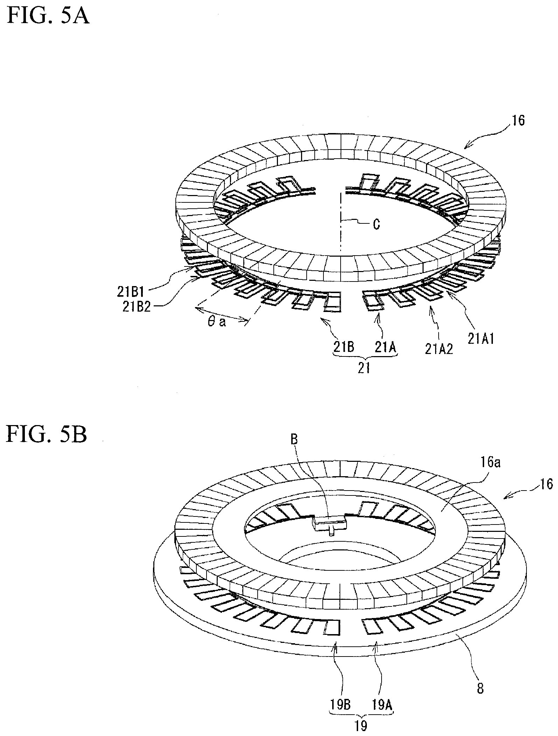

Next, the second variation will be described. FIG. 5A is an explanatory view of an FG pattern 21 in the second variation. The FG pattern 21 in the second variation includes patterns 21A and 21B formed on the printed circuit board 8 omitted in FIG. 5A, but the printed circuit board 8 is a multilayer printed circuit board. The pattern 21A includes a superimposed pattern 21A1 formed on the surface of the outermost layer of the printed circuit board 8, and a superimposed pattern 21A2 formed on an inner layer of the printed circuit board 8. Likewise, the pattern 21 B includes a superimposed pattern 21B1 formed on the surface of the outermost layer of the printed circuit board 8 and a superimposed pattern 21B2 formed on the inner layer of the printed circuit board 8. The superimposed patterns 21A1 and 21A2 are substantially superimpose each other when viewed in the direction perpendicular to the surface of the printed circuit board 8. The same is true for the superimposed patterns 21B1 and 21B2. The superimposed patterns 21A1 and 21B1 are formed on the surface of the same outermost layer of the printed circuit board 8. The superimposed patterns 21A2 and 21B2 are formed on the same inner layer of the printed circuit board 8. Both ends of the superimposed pattern 21A1 and both ends of the superimposed pattern 21A2 are connected so as to identify the phases of the induced voltages generated in the superimposed patterns 21A1 and 21A2 to each other. This increases the amplitude of the voltage signal in the pattern 21A. The same is true for the superimposed patterns 21B1 and 21B2.

In the second variation, the patterns 21A and 21B include the superimposed patterns 21A1 and 21A2 and the superimposed patterns 21B1 and 21B2, respectively, but only one of the two patterns includes two or more superposed patterns. Additionally, at least one of the two patterns may include three or more superimposed patterns. In this case, three or more superimposed patterns are respectively provided in different layers of the printed circuit board.

Next, the third variation will be described. FIG. 5B is an explanatory view of the third variation. In the third variation, a hall sensor B of a magnetic sensor is mounted on the printed circuit board 8, and a sensor magnet 16a having an annular shape is fixed to the inner circumference of the FG magnet 16. Accordingly, the sensor magnet 16a rotates together with the rotor yoke 5 and the FG magnet 16. The sensor magnet 16a is magnetized to have two different poles in the circumferential direction. The sensor magnet 16a and the hall sensor B face each other. The sensor magnet 16a and the FG pattern 19 are separated from each other to the extent that the rotation of the sensor magnet 16a does not generate the induced voltage in the FG pattern 19. The hall sensor B outputs a predetermined signal when facing the S pole of the sensor magnet 16a, but does not output the above signal when facing the N pole of the sensor magnet 16a. That is, the output signal of the hall sensor B varies depending on the rotational position of the sensor magnet 16a.

In the third variation, for example, in addition to the rotational position detected by the FG pattern 19 and the FG magnet 16, the position of the rotor yoke 5 at the timing of outputting the output signal from the hall sensor B is detected as the original position, which can detect an absolute position.

In the first and second variations described above, the hall sensor B and the sensor magnet 16a may be used.

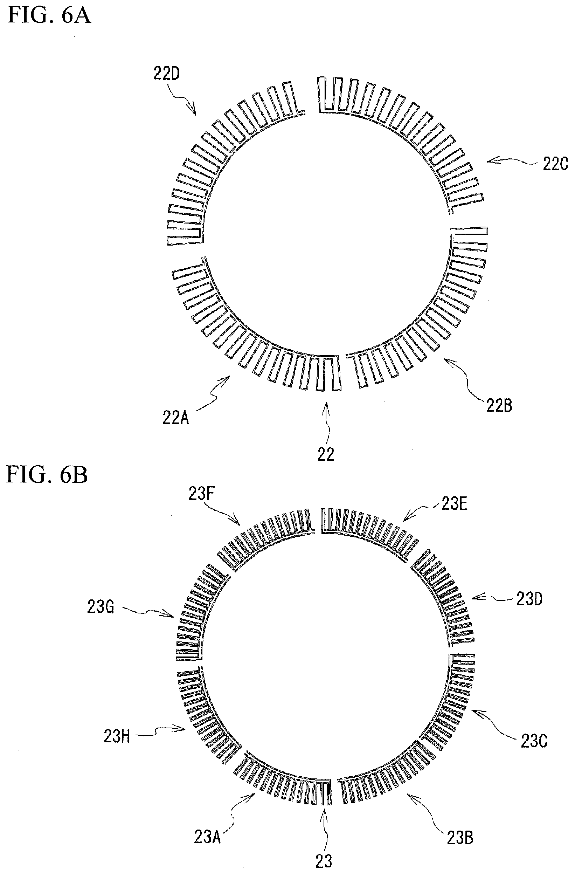

Next, the fourth variation will be described. FIG. 6A is an explanatory view of an FG pattern 22 in the fourth variation. The FG pattern 22 includes patterns 22 A to 22 D divided into four in the circumferential direction. The patterns 22A and 22B, the patterns 22B and 22C, and the patterns 22C and 22D satisfy the above-described equations (1) to (5). In the variation, the total number of FG patterns 22 satisfies N2=4. Therefore, $\theta f=\{\theta a/8\}\times i$ is satisfied in this variation. In this case, as for the number of poles of the FG magnet (not illustrated), N1=120 and θa=6 degrees are satisfied. Therefore, in the fourth variation, the patterns 22A, 22B, and 22C respectively differ from the patterns 22B, 22C, and 22D by 45 degrees in electrical angle. Therefore, the patterns 22B to 22D respectively differ from the pattern 22A by 45 degrees, 90 degrees, and 135 degrees in electrical angle. In this way, the provision of more patterns further improves the resolution.

In the fourth variation, like the first variation, at least one of the patterns 22A to 22D may be doubly formed. Like the second variation, at least one of the patterns 22A to 22D may include superimposed patterns. Also in the fourth variation, like the third variation, the hall sensor B and the sensor magnet 16a may be used.

Next, the fifth variation will be described. FIG. 6B is an explanatory view of an FG pattern 23 in the fifth variation. The FG pattern 23 is divided into eight patterns 23A to 23H in the circumferential direction. Each of the patterns 23A and 23B, the patterns 23B and 23C, the patterns 23C and 23D, the patterns 23D and 23E, the patterns 23E and 23F, the patterns 23F and 23G, and the patterns 23G and 23H satisfies the above-mentioned equations (1). In the present embodiment, as for the total number of the FG patterns 23, N2=8. Therefore, $\theta f=(\theta a/16\}\times i$ is satisfied in this variation. In this case, as for the number of poles of the FG magnet not illustrated, N1=240 and θa=3 degrees are satisfied. For this reason, in the fifth variation, the patterns 23A, 23B, 23C, 23D, 23E, 23F, and 23G respectively differ from the patterns 23B, 23C, 23D, 23E, 23F, 23G, and 23H by 22.5 degrees in electrical angle. Therefore, the patterns 23B to 23H respectively differ from the pattern 23A by 22.5 degrees, 45 degrees, 67.5 degrees, 90 degrees, 112.5 degrees, 135 degrees, and 157.5 degrees, in electrical angle. In this way, providing more patterns improves the resolution.

In the fifth variation, at least one of the patterns 23A to 23H may be doubly formed like the first variation, or at least one of the patterns 23A to 23H may include a superimposed pattern like the second variation. Also, in the fifth variation, like the third variation, the hall sensor B and the sensor magnet 16a may be used.

In the above embodiment and variations, the rotational position detection device is incorporated into the motor device, but the present invention is not limited to such a configuration. For example, it may be a rotational position detection device configured separately from the motor device.

While the exemplary embodiments of the present invention have been illustrated in detail, the present invention is not limited to the above-mentioned embodiments, and other embodiments, variations and modifications may be made without departing from the scope of the present invention.

## Claims

1.  A rotational position detection device comprising:

    an FG magnet rotating together with a rotor and having N poles and S poles alternately magnetized at even intervals in a circumferential direction around a rotation axis of the rotor; and
    a printed circuit board on which an FG pattern facing the FG magnet is formed such that an induced voltage is generated by rotation of the FG magnet,
    wherein
    the FG pattern includes patterns electrically separated from each other on the printed circuit board, and
    the patterns differ from each other by an electrical angle excluding an integral multiple of 180 degrees in electrical angle.

2.  The rotational position detection device of claim 1, wherein
    the patterns are concentrically formed around the rotation axis in a same circumferential direction,
    the patterns adjacent to each other are spaced away from each other and face each other.

3.  The rotational position detection device of claim 1 or 2, wherein
    each of the patterns adjacent to each other includes:

    an arc portion formed into an arc shape in the circumferential direction about the rotation axis;
    radial portions extending radially about the rotation axis;
    first connection portions connecting adjacent radial portions with each other and distant from the rotational axis;
    second connection portions connecting adjacent radial portion with each other and close to the rotational axis, and the first and second connection portions being alternately arranged in the circumferential direction, and

    a following equation is satisfied.

$$\theta b = \theta d = \theta e = \theta a / 2 \ldots (1)$$

$$\theta c = \theta a \ldots (2)$$

$$\theta a = 360 / (N1/2) \ldots (3)$$

$$\theta f = \{\theta a / (2 \times N2)\} \times i \ldots (4)$$

$$i \neq 2n \ldots (5)$$

    wherein

    θa [deg] indicates an angle of a pair of the N pole and the S pole adjacent to each other of the FG magnet,
    θb [deg] indicates an angle between centers of the first connection portion and the second connection portion adjacent to each other, and
    θc [deg] indicates an angle between the centers of the two first connection portions adjacent to each other.

4.  The rotational position detection device of any one of claims 1 to 3, wherein at least one of the patterns is doubly formed.

5.  The rotational position detection device of any one of claims 1 to 4,
    wherein
    the printed circuit board is a multilayer board including layers, and
    at least one of the patterns including patterns provided in different layers.

6. The rotational position detection device of any one of claims 1 to 5, further comprising: a sensor magnet rotating together with the rotator; and a hall sensor outputs a signal variable according to a rotational position of the sensor magnet.

7. A motor device comprising the rotational position detection device of any one of claims 1 to 6.

FIG. 1

FIG. 2A

FIG. 2B

FIG. 3A

FIG. 3B

FIG. 3C

FIG. 3D

FIG. 4A

FIG. 4B

FIG. 5A

FIG. 5B

FIG. 6A

FIG. 6B

Europäisches
Patentamt

European
Patent Office

Office européen
des brevets

# EUROPEAN SEARCH REPORT

Application Number

EP 18 15 2896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 656 377 A (AKIYAMA NAOKI [JP] ET AL) 7 April 1987 (1987-04-07) * column 2, lines 57-59; figures 1-3,6 * ----- | 1-3,7 | INV. H02K24/00 H02K3/26 H02K11/215 |
| X | US 2003/057941 A1 (COLLIER-HALLMAN STEVEN JAMES [US] ET AL) 27 March 2003 (2003-03-27) * paragraphs [0051], [0052], [0054]; claim 59; figures 1-3 * ----- | 1-7 | |
| X | JP H09 170934 A (PFU LTD) 30 June 1997 (1997-06-30) * figures 5-7 * ----- | 1,2,7 | |
| X | US 6 020 663 A (FURUKI SHIGERU [JP]) 1 February 2000 (2000-02-01) * figures 6,7 * ----- | 1-3,7 | |

TECHNICAL FIELDS
SEARCHED      (IPC)

H02K

The present search report has been drawn up for all claims

| Place of search | Date of completion of the search | Examiner |
|---|---|---|
| Munich | 11 June 2018 | Fromm, Udo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 2896

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2018

| Patent document cited in search report | | Publication date | Patent family member(s) | | Publication date |
|---|---|---|---|---|---|
| US 4656377 | A | 07-04-1987 | DE | 3502899 A1 | 01-08-1985 |
| | | | US | 4656377 A | 07-04-1987 |
| US 2003057941 | A1 | 27-03-2003 | EP | 1417496 A1 | 12-05-2004 |
| | | | US | 2003057941 A1 | 27-03-2003 |
| | | | WO | 03012455 A1 | 13-02-2003 |
| JP H09170934 | A | 30-06-1997 | NONE | | |
| US 6020663 | A | 01-02-2000 | JP | 3537294 B2 | 14-06-2004 |
| | | | JP | H1155924 A | 26-02-1999 |
| | | | US | 6020663 A | 01-02-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016099584 A